# EUROPEAN PATENT SPECIFICATION

(11) **EP 3 274 568 B1**
(45) Date of publication and mention of the grant of the patent: **27.02.2019**
(21) Application number: 16711303.4
(22) Date of filing: 23.03.2016
(51) Int. Cl.: F01N 3/20, E03B 7/10

(54) **SUCTION TUBE, UREA SENSOR WITH A SUCTION TUBE AND SELECTIVE CATALYTIC REDUCTION (SCR) SYSTEM WITH A UREA SENSOR AND A SUCTION MECHANISM AND SUCTION TUBE**
SAUGROHR, HARNSTOFFSENSOR MIT EINEM SAUGROHR UND SYSTEM ZUR SELEKTIVEN KATALYTISCHEN REDUKTION (SCR) MIT EINEM HARNSTOFFSENSOR UND SAUGMECHANISMUS UND SAUGROHR
TUBE D'ASPIRATION, CAPTEUR D'URÉE AYANT UN TUBE D'ASPIRATION ET SYSTÈME DE RÉDUCTION CATALYTIQUE SÉLECTIVE (RCS) AYANT UN CAPTEUR D'URÉE ET UN MÉCANISME D'ASPIRATION ET UN TUBE D'ASPIRATION

(30) Priority: 27.03.2015 EP 15305456
(43) Date of publication of application: 31.01.2018
(73) Proprietor: Wema System AS, 5258 Blomsterdalen (NO); MEAS France SAS, 31027 Toulouse Cedex 3 (FR)
(72) Inventor: WOODS, Erling Alfred, 5259 Hjellestad (NO); CASTANDET, Armand, 31500 Toulouse (FR)
(74) Representative: Grünecker Patent- und Rechtsanwälte PartG mbB
(86) International application number: PCT/EP2016/056397
(87) International publication number: WO 2016/156151

(56) References cited:
- DE-A1-102009 002 209
- DE-A1-102013 000 208

## Description

The invention relates to a suction tube for a urea sensor for installation in a urea tank that is used for drawing urea solution from the urea tank with a suction pipe and a suction opening.

The invention further relates to a urea sensor for installation in a urea tank and a suction mechanism with a suction tube.

The invention further relates to a selective catalytic reduction (SCR) system for use with urea solution for purification of exhaust gases of diesel vehicles with a urea sensor for installation in a urea tank and a suction mechanism and suction tube.

Selective Catalytic Reduction (SCR) reduction systems have been employed for purification of harmful NOx components in the exhaust gases of diesel vehicles. The SCR systems use urea solution referred to as Diesel Exhaust Fluid (DEF) for purification of the exhaust gases. The urea solution is stored in a urea tank provided on the vehicles. It is essential to ensure appropriate composition and levels of the urea solution inside the tank to achieve efficient purification of the exhaust gases. Urea sensors are thus employed in the urea tanks for measurement of the level and/or concentration and/or temperature of the urea solution in the tank.

A urea sensor is provided with a level measurement means. In addition, a concentration and/or quality measurement means, temperature measurement means, a suction tube and a return tube at times. The suction tube draws urea solution from the urea tank and provides it for breaking down the NOx in the exhaust gas and the return tube circulates any excess amount of urea solution back into the urea tank.

Since the urea solution has a freezing point of -11 °C there is risk of freezing of the urea solution for any temperature below -11 °C. Frozen urea solution can pose problems and difficulty in achieving efficient breaking down of NOx. This is because of high volume expansion of the urea solution due to freezing which can result in excessive pressure to be generated inside the suction tube. In addition, due to these high pressures there is a possibility of rupture of the suction pipe, of the fittings on the suction pipe and so on. In other cases, this pressure may act downwards, forcing the filter on the urea sensor to move or break apart.

Currently, there are no efficient solutions to overcome this problem of the over pressure on the suction pipe.

KR101205234 B1 discloses a urea solution tank for a diesel vehicle to prevent ice from colliding with a sensor module as the lower parts of a heating pipe, suction pipe, level sensor, and quality sensor are inserted into a protector. The urea solution tank for a diesel vehicle comprises a tank housing, a sensor module, and a protector. The sensor module comprises a heating pipe, a suction pipe, a level sensor, and a quality sensor. The heating pipe melts the frozen urea solution in the winter. The suction pipe supplies the urea solution to a urea solution sprayer. The level sensor measures the level of the urea solution by a float. The quality sensor measures the concentration and temperature of the urea solution. The lower parts of the heating pipe, suction pipe, level sensor, and quality sensor are inserted into the protector. The protector prevents ice from colliding with the sensor module. The melted urea solution flows down along an inclined portion, and the urea solution flows to the inlet of the suction pipe.

From KR 102013005141 A a vertical pipe is known for electrically melting a frozen urea solution. A flexible heating member is provided to rapidly melt the frozen urea solution by independently controlling temperature by a temperature control unit. The vertical pipe for electrically melting the frozen urea solution comprises flexible heating members, a filler member, a urea solution suction pipe, and a urea solution return pipe. The flexible heating members are arranged in a space between an outer pipe and an inner pipe along the length of the vertical pipe at constant intervals. The flexible heating member is filled with the filler members. The urea solution return pipe is shorter than the urea solution suction pipe. The urea solution return pipe and the urea solution suction pipe are inserted into the inner pipe.

KR 10-2012-0119470 discloses a sensor unit for a urea tank with a return pipe for defrosting frozen water. The unit is provided to rapidly defrost the frozen water without driving an engine by having a heating cable and filler in a space between the inner and outer pipes of a dual pipe unit. The sensor unit for a urea tank with a return pipe for defrosting frozen water comprises a head, a lead pipe, a heating pipe, a urea suction pipe, a urea return pipe, and a float. A plurality of nozzle holes is formed on the outer surface of the return pipe, and discharges the urea to the urea tank. The nozzle holes are connected to an inner fluid path. The float is coupled to the outer diameter of the lead pipe, and slides up and down according to the amount of the urea in the urea tank.

JP2010216306 A discloses an aqueous urea tank for a vehicle for use in an exhaust emission control device for the vehicle, capable of simplifying a thawing means for aqueous urea solution and assuring an excellent aqueous urea thawing performance in the tank. The aqueous urea tank for vehicle has a cooling water pipe through which engine cooling water flows. The tank further has an aqueous urea pipe to suck in the aqueous urea and send to an aqueous urea SCR system. The cooling water pipe is furnished partially with an aqueous urea heating pipe structured so that a flow passage is formed in a large diameter pipe in a space with respect to its inner wall and a small diameter pipe is provided internally, wherein one of the pipes is used as aqueous urea pipe while the other is used as the cooling water pipe, and a suction hole at the tip of the first pipe is located near the bottom in the tank body so as to suck in the aqueous urea solution, and the aqueous urea solution flowing through this pipe is heated by the engine cooling water flowing through the other pipe.

WO2011078692 A1 discloses an apparatus for measuring quality of a urea solution which is operated with at least a portion of the apparatus inserted into the urea solution. The apparatus includes a configuration of sensors for measuring mechanical and electrical properties within a volume of the urea solution, the measurements of mechanical and electrical properties being mutually differently influenced by components present in the urea solution. A data processing arrangement of the apparatus is operable to process the measurements of mechanical and electrical properties for generating output data indicative of a quality of the urea solution. The apparatus is also capable of being adapted to measure qualities of other types of solution.

DE 10 2013 000208 A1 discloses a device for determining function-relevant characteristics of fluids, in particular of aqueous urea solutions provided for exhaust-gas treatment in internal combustion engines, has a flow channel which forms a test section, through which at least one test quantity of the fluid can flow. At least one sensor device is associated with the test section, said device identifying at least one characteristic of the fluid. An ultrasonic sensor device which identifies the concentration of the fluid, in particular of the aqueous urea solution, can be provided as a first sensor device. A temperature sensor adjacent to the test section can be provided as an additional sensor device.

There is still a need for a technical solution to overcome the above problem and improve operation of the suction-return under cold conditions.

The object of this invention is thus to provide a suction tube, a urea sensor with a suction tube and a selective catalytic reduction (SCR) system with a urea sensor and a suction tube with improved operation of the suction-return under cold conditions.

This object is achieved by a suction tube according to claim 1, a urea sensor with a suction tube according to claim 7 and a selective catalytic reduction (SCR) system with a urea sensor and a suction tube according to claim 10.

The present invention is based on the idea to prevent over/under pressure in the suction tube of a urea sensor by a mechanism that provides a suction tube with one or more holes on it and covers the outside by a circumventing hose (which is made of a flexible material such as rubber, plastic or the like and which is acting like a valve). The purpose of the hole and the hose around it is to handle the pressure that may act inside the suction tube. When there is an under-pressure in the suction pipe compared to the urea solution in the tank, the rubber will lock against the tube and seal the hole to prevent any intrusion of urea solution from the tank into the pipe through the hole, while with an overpressure inside the suction tube, the hose has sufficient flexibility to yield and allow excess urea solution to escape through the hole and flow back into the tank to prevent excessive build-up of pressure inside the suction tube or even inside the hose.

In an embodiment, the holes may be located along the length of the suction tube on one side or more than one side. In another embodiment, the rubber hose may be provided with a bulge corresponding to the hole on the suction tube such that the bulge penetrates into the hole to secure the rubber from moving along the pipe from any mechanical force generated by waves in the urea solution, thermal expansion of pipes, or ice forming in the tank and the like.

In an embodiment, each rubber hose may be enclosing a hole of the suction pipe. Another possibility is to have a single rubber hose enclosing the entire area of the holes of the suction pipe.

In an embodiment, the circumventing rubber hose may be provided with holes in it which are placed at a certain distance from the closest hole in the suction pipe being circumvented by the rubber house.

In an embodiment, the suction tube may be running in parallel to a coolant pipe, wherein hot fluid may be circulated, along at least a part of the total length of the suction tube. Further, the suction tube may be connected to the coolant pipe using some kind of clamp to secure the distance. The clamp may be made from metal or another material that will secure a thermal bridge between the coolant pipe and the suction pipe to facilitate heating of the suction tube to thaw any ice that may have formed inside the coolant pipe.

In an embodiment, the rubber hose may be separated into segments that extend between the clamps so that the clamps are keeping the rubber in place and preventing any sliding along the pipe. The clamps are not made to tightly fit the rubber hose on the suction tube, if they are, they are only used on one side of a hole, so that the rubber tube still allows excess fluid to flow back from the rubber hose into the tank.

The invention will now be described in greater detail using advantageous embodiments in an exemplary manner and with reference to the drawings. The described embodiments are merely possible configurations and it must be borne in mind that the individual features of the dependent claims can be provided independently of one another or can be omitted altogether while implementing this invention.

The drawings show:
- Fig. 1: shows an exemplary embodiment of a urea sensor and a urea tank according to this invention;
- Fig. 2: shows a suction tube of the exemplary embodiment of Fig. 1;
- Fig. 3: shows the urea sensor of the embodiment of Fig. 1 with individual hoses;
- Fig. 4: shows another exemplary embodiment a urea sensor with a single hose;

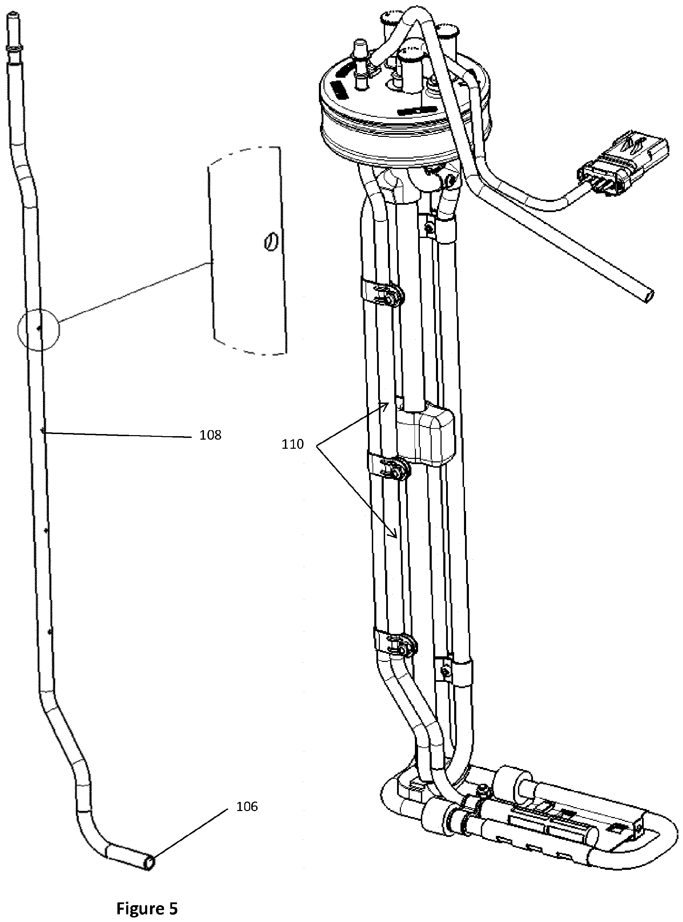

- Fig. 5: shows the embodiment of Figure 4 with an additional metal clamp.

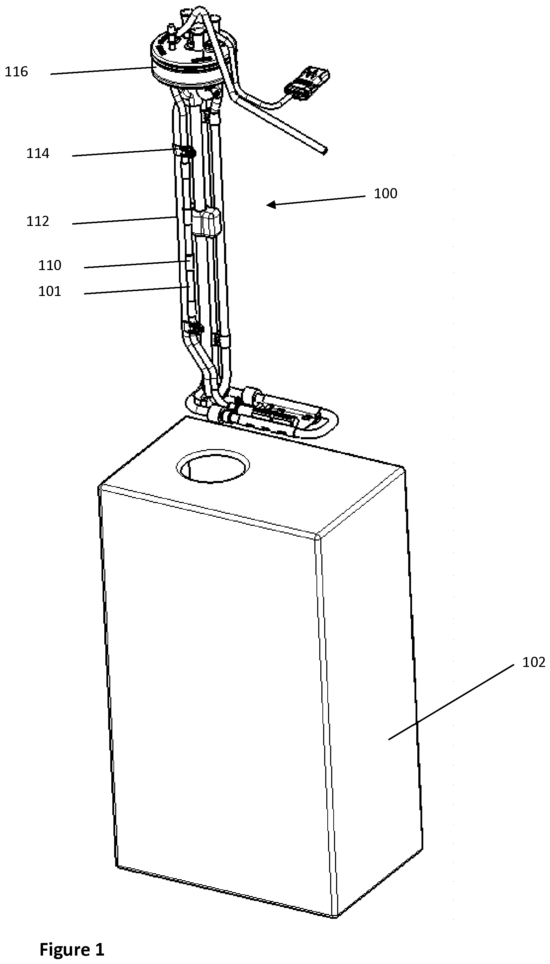

The present invention will now be explained in more detail with reference to the Figures. Referring now to Fig. 1, same shows in a partly exploded view an exemplary embodiment of a urea sensor 100 and a urea tank 102 according to this invention. The urea sensor 100 as shown in Fig. 1 may for instance include a quality sensor for monitoring the quality of the urea solution for exhaust treatment systems of diesel vehicles with further installations as shown in WO 2011/078692 A1. In order to provide the solution from the tank 102 to a sensor arrangement 116, a suction tube 101 with a suction opening 106 emerges into the tank 102.

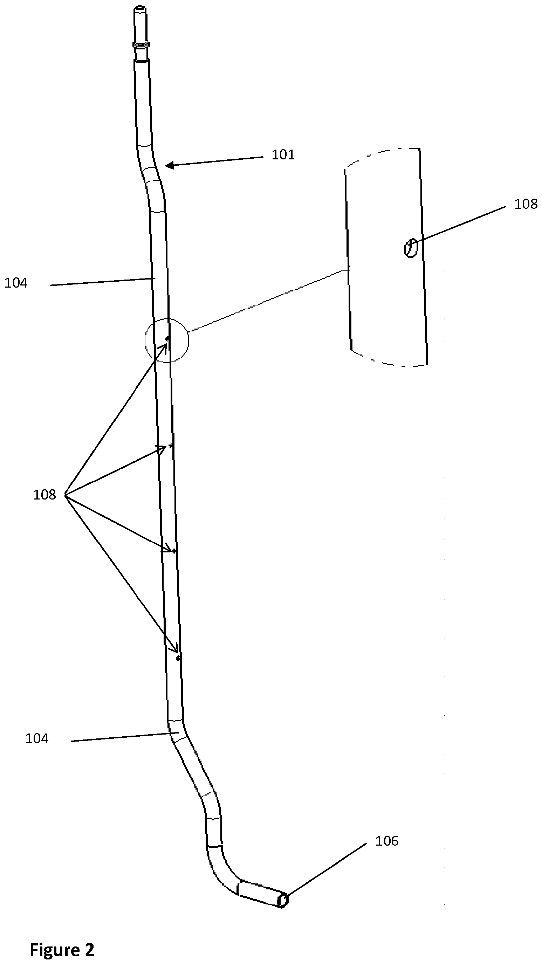

Fig. 2 shows the suction tube 101 from Fig. 1. In a mounted state, the suction opening 106 is located in a region near the bottom of the tank 102. Suction pipe 104 leads upwards through the tank 102 towards the supporting flange 116.

According to the present invention, a plurality of holes 108 is provided in the suction pipe 104. These holes 108 allow fluids, i. e. liquids and gas to pass through the wall of the suction pipe 104.

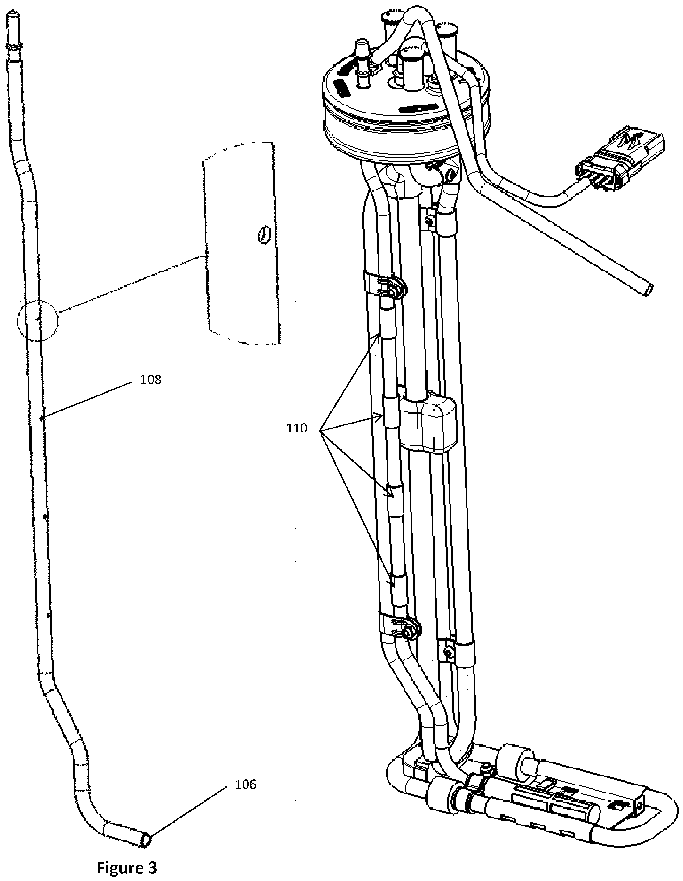

In order to seal these holes 108 in a valve like manner, covers 110 are provided according to the present invention. These covers 110 are elastic so that they can expand and contract under the influence of pressure. Fig. 3 shows an embodiment where each of the holes 108 is provided with a separate cover 110. For instance, these covers 110 can be formed by short pieces of a hose. Each short piece acts like a valve and allows venting. The excess fluid flows back into the tank.

By providing the suction pipe 104 with at least one hole 108 that is covered on the outside by a cover 110, it can be ensured that when there is an under-pressure in the suction pipe 104 compared to in the urea tank 102, the cover 110 will lock against the suction pipe 104 and seal the hole 108. On the other hand, with an overpressure inside the suction pipe 104 compared to the tank 102, the cover 110 deforms to allow excess urea solution to escape through the hole 108 from the suction pipe 104 and flow back in to the tank.

For stabilizing the mechanical setup, clamps 114 can be provided which fix the suction pipe 104 at a coolant pipe 112 running in parallel to the suction pipe 104. These clamps 114 can also help fixing the cover 110 but they are arranged such that the fluid can still escape from the cover 110 into the tank.

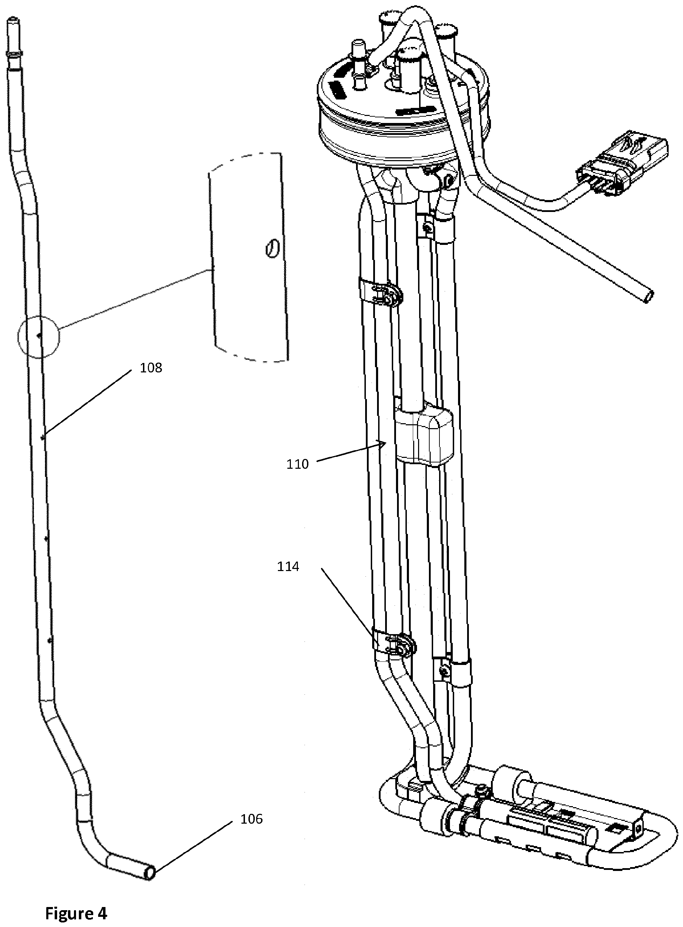

Instead of covering each hole 108 by means of an individual cover 110, according to an alternative embodiment, one or more of the holes can be covered by the shared cover 110, for instance a longer piece of hose. Such an arrangement is shown in Fig. 4.

**Reference Numerals:**

| **Reference Numeral** | **Description** |
|---|---|
| 100 | Urea sensor |
| 101 | Suction tube |
| 102 | Urea tank |
| 104 | Suction pipe |
| 106 | Suction opening |
| 108 | Hole |
| 110 | Cover |
| 112 | Coolant pipe |
| 114 | Clamp |
| 116 | Supporting flange |

## Claims

1. Suction tube for a urea sensor for installation in a urea tank (102) for drawing urea solution from the urea tank, the suction tube (101) having a suction pipe (104) with a suction opening (106),
**characterized in that**
the suction pipe (104) has at least one hole (108) that is covered on the outside by a cover (110) such that when, while the suction tube is installed in the tank, there is an under-pressure inside the suction pipe (104) compared to in the tank (102), the cover (110) will lock against the suction pipe (104) and seal the hole (108), while with an overpressure inside the suction pipe (104) compared to the tank (102), the cover (110) deforms and allows excess urea solution to escape through the hole (108) from the suction pipe (104) back into the tank, wherein the cover (110) is formed as a hose made from flexible material, such as rubber or plastic, and wherein the at least one hole (108) is covered by the hose (110), that is partially surrounding the suction pipe (104).

2. Suction tube according to claim 1, **characterized in that** the suction pipe (104) has several holes (108) distributed over its length and each hole (108) is covered by a separate hose (110).

3. Suction tube according to claim 1, **characterized in that** the suction pipe (104) has several holes (108) distributed over its length and several holes (108) are covered by the same hose (110).

4. Suction tube according to one of claims 2 or 3, **characterized in that** the holes (108) are all arranged on one side of the suction pipe (104).

5. Suction tube according to one of the claims 1 to 4, **characterized in that** the hose (110) has a bulge corresponding to the hole (108) on the suction pipe (104), wherein the bulge penetrates into the hole (108).

6. Suction tube according to one of the claims 1 to 5, **characterized in that** the hose (110) is fixed with at least one clamp (114) to the suction pipe (104) and that the clamp (114) is not made to tightly fit the hose (110) and/or is arranged only on one side of a hole (110) such that excess urea solution can escape back into the tank.

7. Urea sensor for installation in a urea tank (102) that can be used for measuring one or several properties of the urea solution in the tank and for drawing urea solution from the urea tank the urea sensor comprising a suction tube according to one of the claims 1-6.

8. Urea sensor for installation in a urea tank (102) that can be used for measuring one or several properties of the urea solution in the tank and for drawing urea solution from the urea tank according to claim 7, **characterized in that** the suction pipe (104) runs parallel to a coolant pipe (112).

9. Urea sensor for installation in a urea tank (102) that can be used for measuring one or several properties of the urea solution in the tank and for drawing urea solution from the urea tank according to claim 8, **characterized in that** the suction pipe (104) is connected to the coolant pipe (112) with at least one clamp (114).

10. Selective catalytic reduction (SCR) system for purification of harmful NOx components in the exhaust gases of diesel vehicles with a urea tank (102) and a urea sensor (100) for installation in the urea tank for measuring one or several properties of the urea solution in the tank, the urea sensor comprising a suction tube (101) for drawing urea solution from the urea tank according to claim 1 to 6.

## Patentansprüche

1. Ansaug-Rohrleitung für einen Harnstoff-Sensor zur Installation in einem Harnstoff-Tank (102) zum Ansaugen von Harnstoff-Lösung aus dem Harnstoff-Tank, wobei die Ansaug-Rohrleitung (101) ein Ansaug-Rohr (104) mit einer Ansaug-Öffnung (106) aufweist,
**dadurch gekennzeichnet, dass**
das Ansaug-Rohr (104) wenigstens ein Loch (108) aufweist, das an der Außenseite durch eine Abdeckung (110) abgedeckt wird, so dass, dann, wenn die Ansaug-Rohrleitung in dem Tank installiert ist, und im Inneren des Ansaug-Rohrs (104) gegenüber dem Tank (102) ein Unterdruck herrscht, die Abdeckung (110) an dem Ansaug-Rohr (104) abschließt und das Loch (108) abdichtet, während, wenn im Inneren des Ansaug-Rohrs (104) gegenüber dem Tank (102) ein Überdruck herrscht, sich die Abdeckung (110) verformt und zulässt, dass überschüssige Harnstoff-Lösung durch das Loch (108) über das Ansaug-Rohr (104) wieder in den Tank austritt, wobei die Abdeckung (110) als ein Schlauch ausgebildet ist, der aus flexiblem Material, wie Gummi oder Kunststoff, besteht, und das wenigstens eine Loch (108) von dem Schlauch (110) abgedeckt wird, der das Ansaug-Rohr (104) teilweise umschließt.

2. Ansaug-Rohrleitung nach Anspruch 1, **dadurch gekennzeichnet, dass** das Ansaug-Rohr (104) mehrere Löcher (108) aufweist, die über seine Länge verteilt sind, und jedes Loch (108) von einem separaten Schlauch (110) abgedeckt wird.

3. Ansaug-Rohrleitung nach Anspruch 1, **dadurch gekennzeichnet, dass** das Ansaug-Rohr (104) mehrere Löcher (108) aufweist, die über seine Länge verteilt sind, und mehrere Löcher (108) von dem gleichen Schlauch (110) abgedeckt werden.

4. Ansaug-Rohrleitung nach einem der Ansprüche 2 oder 3, **dadurch gekennzeichnet, dass** alle der Löcher (108) an einer Seite des Ansaug-Rohrs (104) angeordnet sind.

5. Ansaug-Rohrleitung nach einem der Ansprüche 1 bis 4, **dadurch gekennzeichnet, dass** der Schlauch (110) eine Wölbung aufweist, die dem Loch (108) an dem Ansaug-Rohr (104) entspricht, wobei die Wölbung in das Loch (108) eindringt.

6. Ansaug-Rohrleitung nach einem der Ansprüche 1 bis 5, **dadurch gekennzeichnet, dass** der Schlauch (110) mit wenigstens einer Klemme (114) an dem Ansaug-Rohr (104) befestigt ist, und dass die Klemme (114) nicht enganliegend auf den Schlauch (110) passt und/oder nur an einer Seite eines Lochs (110) angeordnet ist, so dass überschüssige Harnstoff-Lösung wieder in den Tank austreten kann.

7. Harnstoff-Sensor zur Installation in einem Harnstoff-Tank (102), der eingesetzt werden kann, um eine oder mehrere Eigenschaft/en der Harnstoff-Lösung in dem Tank zu messen und Harnstoff-Lösung aus dem Harnstoff-Tank anzusaugen, wobei der Harnstoff-Sensor eine Ansaug-Rohrleitung nach einem der Ansprüche 1-6 umfasst.

8. Harnstoff-Sensor zur Installation in einem Harnstoff-Tank (102), der eingesetzt werden kann, um eine oder mehrere Eigenschaft/en der Harnstoff-Lösung in dem Tank zu messen und Harnstoff-Lösung aus dem Harnstoff-Tank anzusaugen, nach Anspruch 7, **dadurch gekennzeichnet, dass** das Ansaug-Rohr (104) parallel zu einem Kühlmittel-Rohr (112) verläuft.

9. Harnstoff-Sensor zur Installation in einem Harnstoff-Tank (102), der eingesetzt werden kann, um eine oder mehrere Eigenschaft/en der Harnstoff-Lösung in dem Tank zu messen und Harnstoff-Lösung aus dem Harnstoff-Tank anzusaugen, nach Anspruch 8, **dadurch gekennzeichnet, dass** das Ansaug-Rohr (104) mit wenigstens einer Klemme (114) mit dem Kühlmittel-Rohr (112) verbunden ist.

10. System für selektive katalytische Reduktion (SCR) zum Abbau von schädlichen NOx-Komponenten in den Abgasen von Dieselfahrzeugen mit einem Harnstoff-Tank (102) und einem Harnstoff-Sensor (100) zur Installation in dem Harnstoff-Tank zum Messen einer oder mehrerer Eigenschaft/en der Harnstoff-Lösung in dem Tank, wobei der Harnstoff-Sensor eine Ansaug-Rohrleitung (101) zum Ansaugen von Harnstoff-Lösung aus dem Harnstoff-Tank nach Anspruch 1 bis 6 umfasst.

## Revendications

1. Tube d'aspiration pour un capteur d'urée en vue d'une installation dans un réservoir d'urée (102) permettant d'absorber une solution d'urée à partir du réservoir d'urée, le tube d'aspiration (101) comportant un tuyau d'aspiration (104) avec une ouverture d'aspiration (106),
**caractérisé en ce que**
le tuyau d'aspiration (104) possède au moins un trou (108) qui est recouvert sur l'extérieur par une protection (110) telle que, alors que le tube d'aspiration est installé dans le réservoir, lorsqu'il existe une dépression à l'intérieur du tuyau d'aspiration (104) par rapport au réservoir (102), la protection (110) se verrouillera contre le tuyau d'aspiration (104) et rendra étanche le trou (108), alors qu'avec une surpression à l'intérieur du tuyau d'aspiration (104) par rapport au réservoir (102), la protection (110) se déforme et autorise la fuite d'une solution d'urée en excès au travers du trou (108) à partir du tuyau d'aspiration (104) pour retourner vers le réservoir, dans lequel la protection (110) est formée comme un tuyau souple constitué d'un matériau souple tel que du caoutchouc ou de la matière plastique, et dans lequel le ou les trous (108) sont recouverts par le tuyau souple (110) qui entoure partiellement le tuyau d'aspiration (104).

2. Tube d'aspiration selon la revendication 1, **caractérisé en ce que** le tuyau d'aspiration (104) possède plusieurs trous (108) répartis sur toute sa longueur, et **en ce que** chaque trou (108) est recouvert par un tuyau souple (110) séparé.

3. Tube d'aspiration selon la revendication 1, **caractérisé en ce que** le tuyau d'aspiration (104) possède plusieurs trous (108) répartis sur toute sa longueur, et **en ce que** plusieurs trous (108) sont recouverts par le même tuyau souple (110).

4. Tube d'aspiration selon l'une des revendications 2 ou 3, **caractérisé en ce que** les trous (108) sont tous disposés sur un seul côté du tuyau d'aspiration (104).

5. Tube d'aspiration selon l'une des revendications 1 à 4, **caractérisé en ce que** le tuyau souple (110) comporte un renflement correspondant au trou (108) sur le tuyau d'aspiration (104), le renflement pénétrant dans le trou (108) .

6. Tube d'aspiration selon l'une des revendications 1 à 5, **caractérisé en ce que** le tuyau souple (110) est fixé avec au moins une pince (114) au tuyau d'aspiration (104) et **en ce que** la pince (114) n'est pas conçue pour s'ajuster hermétiquement au tuyau souple (110) et/ou n'est agencée que sur un seul côté d'un trou (110) de sorte à ce que la solution d'urée en excès puisse s'échapper pour retourner dans le réservoir.

7. Capteur d'urée destiné à une installation dans un réservoir d'urée (102) qui peut être utilisé pour mesurer une ou plusieurs propriétés de la solution d'urée dans le réservoir, et destiné à l'absorption de solution d'urée à partir du réservoir d'urée, le capteur d'urée comprenant un tube d'aspiration conforme à l'une des revendications 1 à 6.

8. Capteur d'urée destiné à une installation dans un réservoir d'urée (102) qui peut être utilisé pour mesurer une ou plusieurs propriétés de la solution d'urée dans le réservoir, et destiné à l'absorption de solution d'urée à partir du réservoir d'urée conforme à la revendication 7, **caractérisé en ce que** le tuyau d'aspiration (104) circule parallèlement à un tuyau de refroidissement (112).

9. Capteur d'urée destiné à une installation dans un réservoir d'urée (102) qui peut être utilisé pour mesurer une ou plusieurs propriétés de la solution d'urée dans le réservoir, et destiné à l'absorption de solution d'urée à partir du réservoir d'urée conforme à la revendication 8, **caractérisé en ce que** le tuyau d'aspiration (104) est relié au tuyau de refroidissement (112) grâce à au moins une pince (114) .

10. Système de réduction catalytique sélective (SCR) destiné à la purification de composants NOx nocifs dans les gaz d'échappement de véhicules diesel, comportant un réservoir d'urée (102) et un capteur d'urée (100) en vue d'une installation dans le réservoir d'urée dans le but de mesurer une ou plusieurs propriétés de la solution d'urée dans le réservoir, le capteur d'urée comprenant un tube d'aspiration (101) destiné à absorber une solution d'urée à partir du réservoir d'urée conformément aux revendications 1 à 6.
